# EUROPEAN PATENT SPECIFICATION

(11) **EP 1 886 789 B1**
(45) Date of publication and mention of the grant of the patent: **20.01.2016**
(21) Application number: 06746987.4
(22) Date of filing: 30.05.2006
(51) Int. Cl.: B29C 45/66, B29C 45/76

(54) **MOLDING CONDITION SETTING METHOD AND MOLD CLAMPING DEVICE**
VERFAHREN ZUR EINSTELLUNG VON SPRITZGIESSBEDINGUNGEN UND FORMSCHLIESSVORRICHTUNG
PROCEDE DE DETERMINATION DES CONDITIONS DE MOULAGE ET DISPOSITIF DE SERRAGE DE MOULE

(30) Priority: 02.06.2005 JP 2005162831
(43) Date of publication of application: 13.02.2008
(73) Proprietor: SUMITOMO HEAVY INDUSTRIES, LTD., Shinagawa-ku, Tokyo 141-8686 (JP)
(72) Inventor: KOBAYASHI, Akihisa, c/o SUMITOMO HEAVY IND., LTD., Chiba-shi, Chiba 263-0001 (JP); ITOH, Akira, c/o SUMITOMO HEAVY INDUSTRIES, LTD., Chiba-shi, Chiba 263-0001 (JP)
(74) Representative: Geyer, Ulrich F.
(86) International application number: PCT/JP2006/310759
(87) International publication number: WO 2006/129651

(56) References cited:
- EP-A1- 1 584 445
- EP-A1- 1 645 395
- EP-A1- 1 859 914
- JP-A- 02 241 653
- JP-A- 04 041 209
- JP-A- 04 241 911
- JP-A- 07 227 891
- JP-A- 10 119 099
- JP-A- 55 025 321
- JP-A- 57 148 634
- JP-A- 57 148 635
- JP-A- 2001 239 563

## Description

### TECHNICAL FIELD

The present invention relates to a molding condition setting method and more particularly to a molding condition setting method in a mold clamping device using a toggle mechanism. The invention further relates to a mold clamping device using a toggle mechanism.

### BACKGROUND ART

In general, a mold device is constructed with a stationary mold and a movable mold and the movable mold is moved forward and backward relative to the stationary mold by a mold clamping device so as to perform mold closing, mold clamping, and mold opening. The mold clamping device includes a stationary platen on which the stationary mold is installed, a movable platen on which the movable mold is installed, and a toggle mechanism as a movement mechanism for moving the movable platen forward and backward. In other words, the mold device is configured to perform mold closing, mold clamping, and mold opening by driving the toggle mechanism so as to move the movable platen in an approaching or distancing direction relative to the stationary platen (refer to Patent Document 1, for example).

In the mold clamping device as mentioned above, when the mold is replaced to have a different mold thickness, the toggle mechanism is required to be adjusted so as to gain appropriate mold-clamping force. Specifically, a position of a toggle support used as an origin of the toggle mechanism is determined in accordance with a mold thickness of the installed mold. A mold-thickness motor is disposed on the mold clamping device as a driving source for moving the toggle support. Accordingly, when the mold is replaced to have a different mold thickness, for example, the mold-thickness motor is driven first so as to move the toggle support to an appropriate position as an operation for adjusting the mold-clamping force.

More specifically, first, a mold-clamping motor is driven to extend a toggle of the toggle mechanism and the movable platen is moved to a mold full-close position. In this case, the toggle support is moved backward to a position such that the movable mold is not in contact with the stationary mold, namely, a position where mold touch does not occur. Next, mold opening is performed as much as a distance by which a predetermined mold-clamping force is applied when a normal mold is used. In other words, the mold-clamping motor is driven to move the movable platen backward as much as the distance in which a setting value of the mold-clamping force is applied. Then, while a status of the toggle mechanism is maintained, the mold-thickness motor is driven to move the toggle support forward until the movable mold is brought into contact with the stationary mold, namely, the mold touch occurs. In accordance with this, positional adjustment of the toggle support (referred to as mold-thickness adjustment) upon replacing the mold is completed.

When the above-mentioned mold-thickness adjustment is performed, the toggle support is moved forward while the toggle mechanism is folded and the mold touch where the movable mold is brought into contact with the stationary mold is performed. In this case, while the toggle support is moved forward, the movable platen is brought close to the stationary platen. When the mold touch has occurred, the forward movement of the toggle support is stopped. Accordingly, it is necessary to detect or judge that the mold touch has occurred and to stop the driving of the mold-thickness motor driving the toggle support at that time.

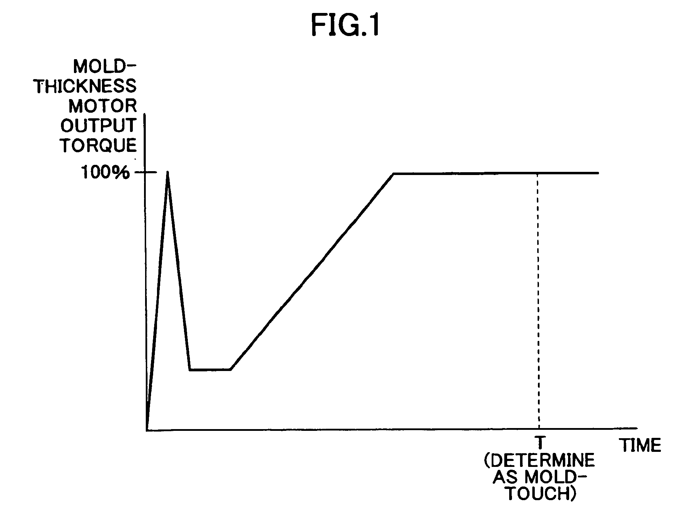

A conventional judgment of the mold touch is performed by monitoring torque of the mold-thickness motor. In other words, as shown in FIG. 1, the mold touch is judged to have occurred when a certain period of time has elapsed after output torque of the mold-thickness motor became 100%. FIG. 1 is a graph showing a change of the output torque of the mold-thickness motor when the mold-thickness motor is driven using a certain voltage to move the toggle support forward for the mold touch.

When the mold-thickness motor is driven to move the toggle support forward while the movable platen is distanced from the stationary platen, the movable platen connected to the toggle support in the toggle mechanism is moved forward at the same time. Accordingly, the movable mold installed on the movable platen is also moved forward. When the toggle support is moved forward from a stationary status, the output torque of the mold-thickness motor is momentarily increased to 100% in order to overcome static friction at a sliding portion of the toggle support. Once the toggle support starts moving, friction at the sliding portion of the toggle support becomes kinetic friction, so that the output torque of the mold-thickness motor is reduced and becomes a certain value. Constant output torque indicates that the toggle support (namely, the movable mold) is being moved forward.

Then, from a time when the stationary mold is moved forward and is brought into contact with the stationary mold, the torque of the mold-thickness motor starts to be increased and is finally increased to 100%. Then, the torque becomes constant at 100%. Conventionally, by detecting that the torque of the mold-thickness motor has become constant at 100%, the mold touch is judged to be completed. In other words, when the mold-thickness motor continues operation at the output torque of 100%, it is judged that the movable mold is in abutment with the stationary mold and the toggle support cannot be moved forward any further.
Patent Document 1: Japanese Laid-Open Patent Application No. 2002-337184

As mentioned above, upon mold-thickness adjustment, when the mold touch is judged to be completed based on the fact that the output torque of the mold-thickness motor has become constant at 100%, the toggle support is stopped at a position where the movable mold is pressed on the stationary mold. In this status, the mold-clamping force is already acting resulting from the pressing force in accordance with the torque of the mold-thickness motor, so that an accurate position of the mold touch without the mold-clamping force is not obtained. A time of the mold touch when the toggle support is supposed to be stopped is when the output torque of the mold-thickness motor starts to be increased from a small constant value.

Thus, when the mold touch is judged based on the output torque of the mold-thickness motor, the position of the toggle support is set to be a forward position relative to a position for obtaining a desired mold-clamping force. In accordance with this, the toggle mechanism is operated and the mold-clamping force is applied from the position set to be a forward position relative to the position where the toggle support is supposed to be stopped. Thus, this is problematic in that a desired mold-clamping force cannot be applied with good accuracy. In particular, when the mold-clamping force is required to be controlled with good accuracy, the position of the toggle support must be set with good accuracy. In view of this, it is necessary to have a technique enabling judgment of the mold touch with improved accuracy.
Document JP 55 025321 discloses a straight-line position detector for two links of a toggle mechanism, a contact detector between metallic molds and an operation control device for a mold fixing unit to obtain a captioned device capable of adjusting a force to fix mold after a mold change in a short time and automatically.
Document EP 1 584 445 disclose a mold clamping adjustment device of a toggle-type injection molding machine moving a rear platen forwards towards a fixed platen by an amount corresponding to a mold clamping force which is set in advance, in a state in which the toggle mechanism is contracted. When it is detected that a movable mold half attached to the rear platen touches a fixed mold half attached to the fixed platen, the rear platen is moved backwards by an amount of stretch, of a tie bar, which is generated from the mold touch.
Document JP 02 241653 discloses a device for controlling open/shut of a die by driving a motor for adjusting die height by the calculated shifting quantity of die thickness based on difference between the die thickness values for the new die and for the old die.
In accordance with the present invention, a molding setting method applied to a mold clamping device using a toggle mechanism as set forth in claim 1 is provided the present invention further provides a mold clamping device in accordance with claim 3. Preferred embodiments are disclosed in the dependent claims.

### DISCLOSURE OF INVENTION

It is a general object of the present invention to provide an improved and useful molding condition setting method in which the above-mentioned problems are eliminated.

A more specific object of the present invention is to provide a molding condition setting method that can stop the toggle support at a desired position by judging the mold touch with good accuracy.

According to the present invention, there is provided a molding condition setting method applied to a mold clamping device using a toggle mechanism, comprising: moving a toggle support forward in a mold closing direction; monitoring a detection value from a mold-clamping force sensor; and stopping the toggle support when the detection value reaches a threshold value.

According to another aspect of the present invention, in the molding condition setting method, after a movable platen is moved to a mold full-open position and the toggle mechanism is operated to perform mold opening, the toggle support may be moved forward in the mold closing direction.

According to the present invention, in the molding condition setting method, the mold-clamping force sensor is anyone of a tie-bar strain sensor detecting strain of a tie-bar, a pressure sensor detecting pressing force applied to the movable platen, the mold-clamping force sensor installed on a movable platen or a strain sensor detecting strain of a component part of the toggle mechanism.

According to the present invention, the mold touch is judged based on the detection value of the mold-clamping force sensor, so that it is possible to judge that the mold touch has occurred with better accuracy in comparison with judgment of the mold touch based on output torque of a mold-thickness motor. Thus, it is possible to stop the toggle support at a desired position with good accuracy and achieve control of mold-clamping force with improved accuracy.

### BRIEF DESCRIPTION OF DRAWINGS

FIG. 1 is a graph showing a change of output torque of a mold-thickness motor;
FIG. 2 is a side elevational view showing a mold clamping device of a molding machine in which a molding condition setting method according to an embodiment of the present invention is performed;
FIG. 3 is a flowchart of a mold-thickness adjusting process;
FIG. 4 is a graph showing a change of a detection value of a mold-clamping force sensor used for judging a mold touch in a mold-thickness adjusting process;
FIG. 5 is a side elevational view showing a mold clamping device having a mold-clamping force sensor installed on a movable platen; and
FIG. 6 is a side elevational view showing a mold clamping device having a mold-clamping force sensor installed on a toggle arm of a toggle mechanism.

### DESCRIPTION OF REFERENCE NUMERALS

- 10: mold clamping device
- 11: mold device
- 12: stationary platen
- 13, 13A: movable platen
- 13B: movable platen supporting member
- 15: toggle support
- 16: tie-bar
- 18, 40, 41: mold-clamping force sensor
- 19: control device
- 20: toggle mechanism
- 26: mold-clamping motor
- 27: mold opening and closing position sensor
- 31: mold-thickness motor
- 32: mold clamping position sensor

### BEST MODE FOR CARRYING OUT THE INVENTION

The present invention is described in detail based on the embodiments illustrated in the drawings.

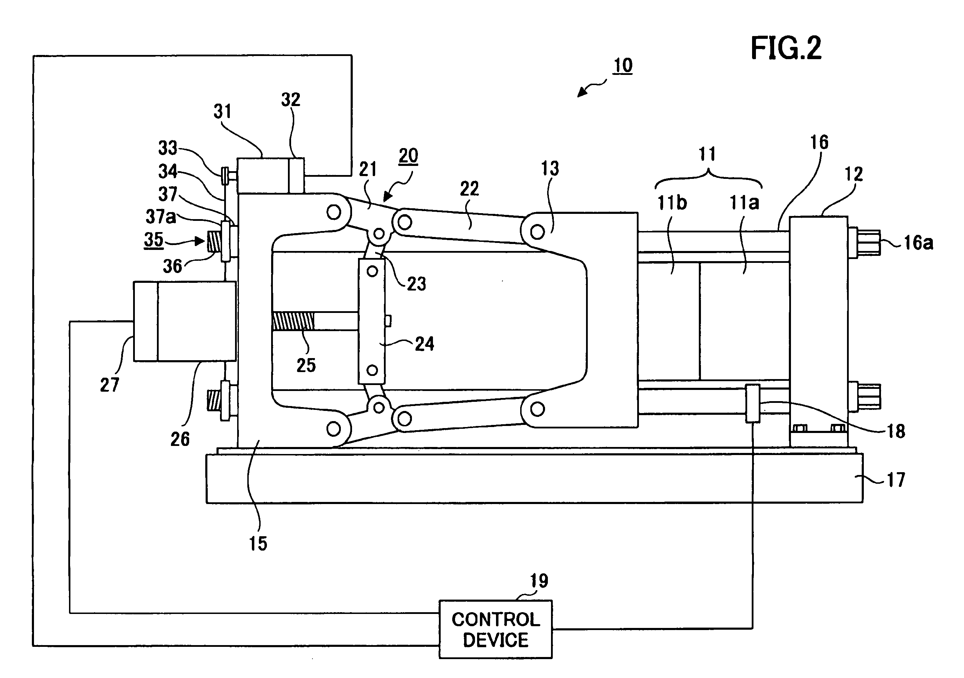

FIG. 2 is a side elevational view showing a mold clamping device of a molding machine in which a molding condition setting method according to an embodiment of the present invention is performed. In FIG. 2, a mold clamping device 10 of an injection molding machine includes a frame 17, a stationary platen 12 fixed on the frame 17 as a device for supporting a stationary mold, and a toggle support 15 movably disposed on the frame 17 as a base plate with a predetermined distance from the stationary platen 12. The toggle support 15 functions as a device for supporting a toggle type mold clamping device. Tie-bars 16 are extended between the stationary platen 12 and the toggle support 15 as plural (four, for example) guide units.

A movable platen 13 is disposed in an opposing manner relative to the stationary platen 12 and functions as a device for supporting a movable mold, the device being disposed movably in forward and backward directions (movement in the right and left directions in the drawing) along with the tie-bars 16. A mold device 11 is constructed with a stationary mold 11a and a movable mold 11b. The stationary mold 11a is installed on a mold installing surface in the stationary platen 12 facing the movable platen 13. On the other hand, the movable mold 11b is installed on a mold installing surface in the movable platen 13 facing the stationary platen 12.

In addition, a driving device for moving an ejector pin not shown in the drawings may be installed on a rear end of the movable platen 13 (left end in the drawing).

A toggle mechanism 20 is installed between the movable platen 13 and the toggle support 15 as a toggle type mold clamping device. A mold-clamping motor 26 is disposed on a rear end of the toggle support 15 as a driving source for mold clamping operating the toggle mechanism 20. The mold-clamping motor 26 includes a movement direction converting device for converting rotational motion to reciprocating motion, the movement direction converting device being constructed with a ball screw mechanism and the like and not shown in the drawings. The mold-clamping motor 26 is capable of operating the toggle mechanism 20 by moving a driving shaft 25 forward and backward (movement in the right and left directions in the drawing). Preferably, the mold-clamping motor 26 is a servo motor and includes a mold opening and closing position sensor 27 as an encoder for detecting a number of rotations.

The above-mentioned toggle mechanism 20 includes a crosshead 24 installed on the driving shaft 25, a second toggle lever 23 swingably installed on the crosshead 24, a first toggle lever 21 swingably installed on the toggle support 15, and a toggle arm 22 swingably installed on the movable platen 13. The first toggle lever 21 is linked to the second toggle lever 23 and the first toggle lever 21 is linked to the toggle arm 22. The toggle mechanism 20 is what is called an inward-bending five-point double toggle mechanism and has a vertically symmetric structure.

By driving the mold-clamping motor 26 to move the crosshead 24 forward and backward as a driven member, it is possible to operate the toggle mechanism 20. In this case, when the crosshead 24 is moved forward (movement in the right direction in the drawing), the movable platen 13 is moved forward and mold closing is performed. Accordingly, mold-clamping force is generated, which is determined by multiplying a driving force of the mold-clamping motor 26 by toggle magnification.

Further, a mold clamping position adjusting device 35 is disposed on a rear end (left end in the drawing) of the toggle support 15 so as to adjust a position of the toggle support 15 relative to the stationary platen 12. On the toggle support 15, plural tie-bar insertion openings (not shown in the drawings), namely, four tie-bar insertion openings, for example, are formed and a left end of the tie-bar 16 in the drawing is inserted into each tie-bar insertion opening. In addition, a right end of the tie-bar 16 is fixed on the stationary platen 12 using a fixing nut 16a.

The tie-bar 16 includes a screw portion 36 where a screw is formed on a circumference thereof at the left end in the drawing and an adjusting nut 37 is screwed on the screw portion 36 of each tie-bar 16. In addition, the adjusting nut 37 is rotatably installed on the rear end of the toggle support 15 so as to be incapable of moving in an axial direction of the tie-bar 16. A driven gear 37a is installed on a circumference of the adjusting nut 37.

Above the rear end of the toggle support 15, a mold-thickness motor 31 is disposed as a driving source for adjusting a mold clamping position. A gear for driving 33 is installed on a rotating shaft of the mold-thickness motor 31. A linear body for driving 34 such as a chain, toothed belt, or the like is wound around the driven gear 37a of the adjusting nut 37 and the gear for driving 33. Thus, when the gear for driving 33 is rotated by driving the mold-thickness motor 31, the adjusting nut 37 screwed on the screw portion 36 of each tie-bar 16 is synchronized to be rotated. In accordance with this, it is possible to rotate the mold-thickness motor 31 for predetermined times in a predetermined direction and move the toggle support 15 forward and backward as much as a predetermined distance. Preferably, the mold-thickness motor 31 is a servo motor and includes a mold clamping position sensor 32 as an encoder for detecting a number of rotations.

A unit transmitting the rotation of the mold-thickness motor 31 to the adjusting nut 37 may be any type as long as the adjusting nut 37 screwed on the screw portion 36 of each tie-bar 16 is synchronized to be rotated. For example, instead of the linear body for driving 34, a gear with a large diameter meshing with all of the gear for driving 33 and the gear for driving 33 may be disposed on the rear end of the toggle support 15.

Further, in the mold clamping device shown in FIG. 2, a mold-clamping force sensor 18 is disposed on one of the tie-bars 16. The mold-clamping force sensor 18 is a sensor detecting strain (elongation mostly) of the tie-bar 16. Upon mold clamping, tensile force is applied to the tie-bar 16 in response to the mold-clamping force and the tie-bar 16 is slightly elongated in proportion to the mold-clamping force. Accordingly, by detecting an amount of the elongation of the tie-bar 16 using the mold-clamping force sensor 18, it is possible to learn the mold-clamping force actually applied to the mold device 11.

In the present embodiment, as described later, when a mold-thickness adjusting process is performed, a mold touch is judged using the mold-clamping force detected by the mold-clamping force sensor 18 and operation of driving of the mold-thickness motor 31 is controlled.

The above-mentioned mold-clamping force sensor 18, mold opening and closing position sensor 27, mold-clamping motor 26, and mold-thickness motor 31 are connected to a control device 19 and detection signals output from the mold-clamping force sensor 18 and the mold opening and closing position sensor 27 are transmitted to the control device 19. The control device 19 controls the operation of the mold-clamping motor 26 and the mold-thickness motor 31 based on the detection signal.

In the following, operation of the mold clamping device upon normal molding is described. When the mold-clamping motor 26 is driven in a forward direction, the ball screw shaft 25 is rotated in the forward direction and, as shown in FIG. 1, the ball screw shaft 25 is moved forward (movement in the right direction in FIG. 1). In accordance with this, the crosshead 24 is moved forward and when the toggle mechanism 20 is operated, the movable platen 13 is moved forward.

When the movable mold 11b installed on the movable platen 13 is brought into contact with the stationary mold 11a (mold closing status), the process proceeds to a mold clamping step. In the mold clamping step, by further driving the mold-clamping motor 26 in the forward direction, mold-clamping force is generated in the mold device 11 by the toggle mechanism 20.

Then, an injection driving unit disposed on an injection device not shown in the drawings is driven and a screw is moved forward, so that a cavity space formed inside the mold device 11 is filled with molten resin. Upon performing mold opening, when the mold-clamping motor 26 is driven in the opposite direction, the driving shaft 25 is rotated in the reverse direction. In accordance with this, the crosshead 24 is moved backward and when the toggle mechanism 20 is operated, the movable platen 13 is moved backward.

When the mold opening step is completed, an ejector driving unit not shown in the drawings is driven and an ejector device installed on the movable platen is operated. In accordance with this, the ejector pin is protruded and a molded item inside the movable mold 11b is protruded from the movable mold 11b. Further, upon driving the ejector driving unit, a molded item taking machine not shown in the drawings is driven as a gripping unit, an arm of the molded item taking machine goes into a space between the stationary mold 11a and the movable mold 11b, and the arm is stopped at a molded item taking position. The molded item protruded from the movable mold 11b by the ejector pin which has moved forward is gripped and taken out by the arm of the molded item taking machine. Then, the molded item is conveyed to a conveyer device externally disposed on the injection molding machine as a conveying unit.

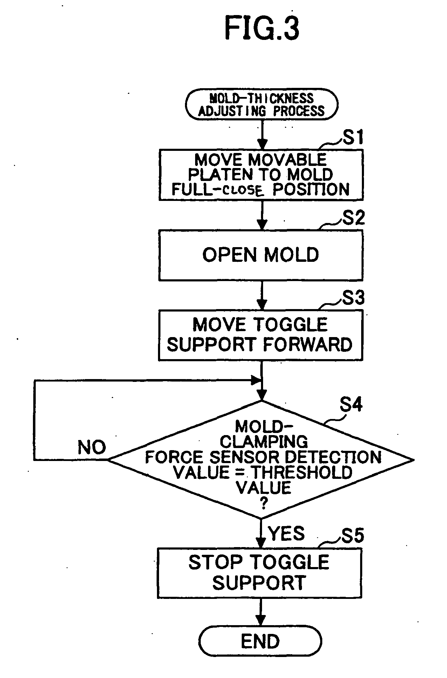

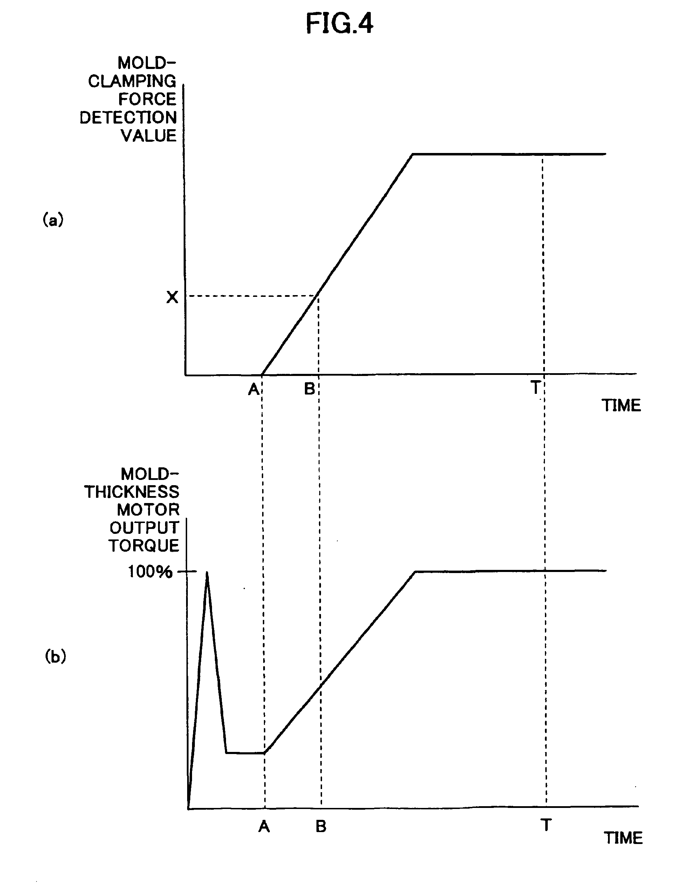

Next, a mold-thickness adjusting method is described as a molding condition setting method performed in the above-mentioned mold clamping device. FIG. 3 is a flowchart of the mold-thickness adjusting process according to the present embodiment. Further, FIG. 4 is a graph showing a change of a detection value of the mold-clamping force sensor used for judging the mold touch in the mold-thickness adjusting method.

For example, when the mold device 11 is newly installed on the mold clamping device 10, it is necessary to adjust the mold clamping device 10 by performing the mold-thickness adjusting process shown in FIG. 3 so as to obtain a desired mold-clamping force (target mold-clamping force Z) at a position of a setting mold-clamping force (origin). The adjustment of the mold clamping device 10 is performed by changing the position of the toggle support 15 based on thickness and rigidity (amount of compressive deformation) of the installed mold device 11. As mentioned above, the adjustment of the fixed position of the toggle support 15 is performed by driving the mold-thickness motor 31 to move the toggle support 15 forward and backward.

In the mold-thickness adjusting process shown in FIG. 3, first, the mold-clamping motor 26 is driven to extend the toggle of the toggle mechanism 20 and the movable platen 13 is moved to a mold full-close position (step S1). At this point, the toggle support 15 is moved backward to a position such that the movable mold 11b is not in contact with the stationary mold 11a, namely, a position where the mold touch does not occur.

Next, the toggle mechanism 20 is operated and mold opening is performed as much as a distance by which a predetermined mold-clamping force is applied when a normal mold is used (step S2). In other words, the mold-clamping motor 26 is driven to move the movable platen 13 backward as much as the distance in which a mold-clamping force setting value is applied. Then, while a status of the toggle mechanism 20 is maintained as in step S2, the mold-thickness motor 31 is driven to move the toggle support 15 forward until the movable mold 11b is brought into contact with the stationary mold 11a, namely, the mold touch occurs (step S3) .

Next, a detection value of the mold-clamping force sensor 18 is monitored so as to judge whether the detection value reaches a predetermined threshold value (step S4). If the detection value does not reach the predetermined threshold value, the judgment process of step S4 is repeated. By contrast, if the detection value is judged to have reached the predetermined threshold value in step S4, the mold touch is judged to have occurred, so that the mold-thickness motor 31 is stopped so as to stop the forward movement of the toggle support 15 (step S5).

As shown in FIG. 4 (a), the detection value output from the mold-clamping force sensor 18 is not increased from a time when the forward movement of the toggle support 15 is started (origin of the graph) but the detection value starts to be increased from a time when the mold touch has actually occurred (A point). Accordingly, the mold touch may be judged to have occurred at the time when the detection value starts to be increased. However, the detection value of the mold-clamping force sensor 18 has dispersion and the detection value may be slightly increased due to disturbance. In view of this, in the present embodiment, a predetermined threshold value X is set in order to avoid erroneously judging the increase of the detection value due to disturbance as the mold touch. In other words, when the detection value output from the mold-clamping force sensor 18 reaches the predetermined threshold value, the mold touch is judged to have occurred.

FIG. 4(b) is a graph showing output torque of the mold-thickness motor and has the same time base as in the graph of FIG. 4(a). As clearly understood from comparison between FIG. 4 (a) and FIG. 4(b), judgment of the mold touch (judgment at B point) based on the detection value of the mold-clamping force sensor is capable of judging the mold touch at a time closer to a time when the mold touch has actually occurred in comparison with judgment of the mold touch (judgment at T point) based on the output torque of the mold-thickness motor. In other words, the judgment of the mold touch based on the detection value of the mold-clamping sensor is capable of judging whether the mold touch has occurred with better accuracy in comparison with the judgment of the mold touch based on the output torque of the mold-thickness motor.

As mentioned above, in the mold-thickness adjusting method according to the present embodiment, it is possible to judge that the mold touch has occurred with good accuracy and achieve control of the mold clamping force with better accuracy.

In the above-mentioned example, although the mold-clamping force sensor 18 is used for detecting the strain of the tie-bar 16, other mold-clamping force sensor may be used as mentioned in the following.

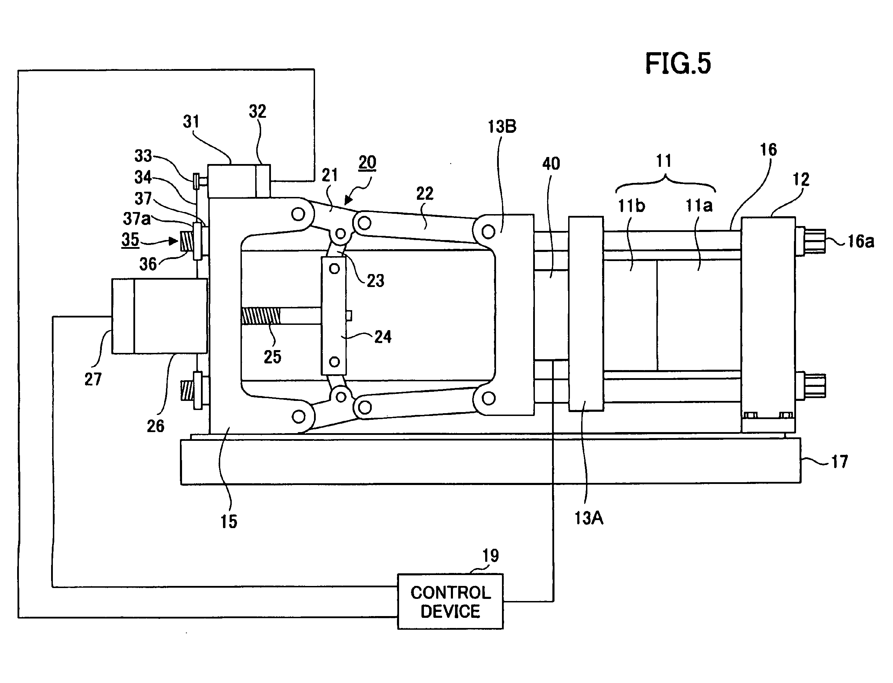

FIG. 5 is a side elevational view showing a mold clamping device having a mold-clamping force sensor installed on a movable platen. In FIG. 5, the same reference numerals are assigned to the same parts as component parts shown in FIG. 2 and description thereof is omitted.

A mold-clamping force sensor 40 shown in FIG. 5 is a pressure sensor disposed between a movable platen 13A and a movable platen supporting member 13B. The movable platen supporting member 13B is connected to the toggle mechanism 20 and is moved by the toggle mechanism 20. The movable platen 13A is fixed on the movable platen supporting member 13B via the mold-clamping force sensor 40, so that the movable platen 13A is moved together with the movable platen supporting member 13B. Pressing force applied to the movable platen supporting member 13B is applied to the movable mold 11b via the mold-clamping force sensor 40 and movable platen 13A and the pressing force becomes the mold-clamping force. Accordingly, the pressing force applied to the mold-clamping force sensor 40 is the mold-clamping force, the mold-clamping force sensor 40 being disposed between the movable platen 13A and the movable platen supporting member 13B. By detecting the pressing force, it is possible to detect the mold-clamping force. The detection value from the mold-clamping force sensor 40 is supplied to the control device 19 and is used for judging the mold touch in the above-mentioned mold-thickness adjusting process.

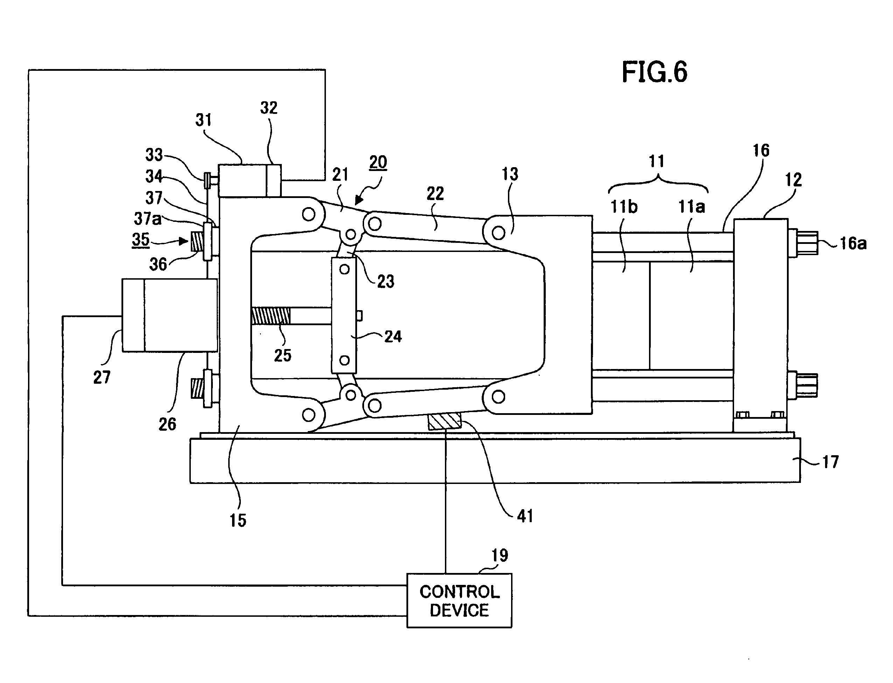

FIG. 6 is a side elevational view showing a mold clamping device having a mold-clamping force sensor installed on a toggle arm of a toggle mechanism. In FIG. 5, the same reference numerals are assigned to the same parts as component parts shown in FIG. 2 and description thereof is omitted.

A mold-clamping sensor 41 shown in FIG. 6 is a strain sensor installed on the toggle arm 22 and detects compression strain and bending strain from pressing force applied to the movable platen 13 via the toggle arm 22. The toggle arm 22 is a part liable to be elastically deformed from the pressing force applied to the movable platen 13. By installing the mold-clamping force sensor 41 on such a part as a strain sensor, it is possible to readily detect the mold-clamping force. The detection value from the mold-clamping force sensor 41 is supplied to the control device 19 and is used for judging the mold touch in the above-mentioned mold-thickness adjusting process.

In addition, a position where the mold-clamping force sensor 41 is installed is not limited to the toggle arm 22 but may be other portion as long as it experiences elastic deformation from the pressing force generated by the toggle mechanism 20. For example, the mold-clamping force sensor 41 may be installed on the first toggle lever 21 or the toggle support 15.

The present invention is not limited to the specifically disclosed embodiment, and variations and modifications may be made without departing from the scope of the present invention as defined in the appended claims.

### INDUSTRIAL APPLICABILITY

The present invention can be applied to a molding condition setting method used in an injection molding machine.

## Claims

1. A molding condition setting method applied to a mold clamping device (10) using a toggle mechanism (20), comprising:
moving (S3) a toggle support (15) forward in a mold closing direction;
monitoring (S4) a detection value from a mold-clamping force sensor (18, 40, 41) for detecting mold touch, wherein said mold-clamping force sensor (18, 40, 41) is any one of a tie-bar strain sensor (18) detecting strain of a tie-bar (16), a pressure sensor (40) installed on a movable platen (13, 13A) and detecting pressing force applied to said movable platen (13, 13A), and a strain sensor (41) detecting strain of a component part of said toggle mechanism (20); and
stopping (S5) said toggle support (15) when the detection value reaches a threshold value.

2. The molding condition setting method according to claim 1, wherein
after a movable platen (13, 13A) is moved to a mold full-close position (S1) and said toggle mechanism (20) is operated to perform mold opening (S2), said toggle support (15) is moved forward in the mold closing direction (S3).

3. A mold clamping device (10) comprising:
a stationary platen (12) supporting a stationary mold (11a);
a movable platen (13, 13A) provided in an opposing manner relative to the stationary platen (12) and supporting a movable mold (11b);
a movable toggle support (15);
a toggle mechanism (20) provided between said movable platen (13, 13A) and said toggle support (15) and adapted to carry out mold clamping; and
a mold-clamping force sensor (18, 40, 41) detecting mold touch and providing a detection value to be used to detect a mold-clamping force,
wherein said mold clamping device (10) is adapted to carry out mold clamping setting by moving said toggle support (15) forward in a mold closing direction, monitoring the detection value from the mold-clamping sensor (18, 40, 41), and stopping the toggle support (15) when the detection value reaches a threshold value, and
wherein said mold-clamping force sensor (18, 40, 41) is any one of a tie-bar strain sensor (18) detecting strain of a tie-bar (16), a pressure sensor (40) installed on a movable platen (13, 13A) and detecting pressing force applied to said movable platen (13, 13A), and a strain sensor (41) detecting strain of a component part of said toggle mechanism (20).

4. The mold clamping device (10) according to claim 3, wherein said mold clamping device (10) is adapted to move said toggle support (15) forward in the mold closing direction, after a movable platen (13, 13A) is moved to a mold full-close position and said toggle mechanism (20) is operated to perform mold opening.

## Patentansprüche

1. Formgebungszustandseinstellverfahren, welches bei einer Formklemmvorrichtung (10) angewendet wird, die einen Kniehebelmechanismus (20) verwendet, welches Folgendes aufweist:
Bewegen (S3) eines Kniehebelträgers (15) nach vorne in einer Formschließrichtung;
Überwachen (S4) eines Detektionswertes von einem Formklemmkraftsensor (18, 40, 41) zum Detektieren einer Formberührung, wobei der Formklemmkraftsensor (18, 40, 41) ein Zugstangendehnungssensor (18), der die Dehnung einer Zugstange (16) detektiert, und/oder ein Drucksensor (40), der an einem bewegbaren Kolben (13, 13A) installiert ist und eine Druckkraft detektiert, die auf die bewegbare Platte (13, 13A) aufgebracht wird, und/oder ein Dehnungssensor (41), der eine Dehnung eines Komponententeils des Kniehebelmechanismus (20) detektiert, ist; und
Stoppen (S5) des Kniehebelträgers (15), wenn der Detektionswert einen Schwellenwert erreicht.

2. Formgebungszustandseinstellverfahren nach Anspruch 1, wobei, nachdem eine bewegbare Platte (13, 13A) zu einer Position (S1) mit vollständig geschlossener Form bewegt wurde und der Kniehebelmechanismus (20) betätigt wird, um einen Formöffnungsvorgang (S2) auszuführen, der Kniehebelträger (15) in der Formschließrichtung (S3) voran bewegt wird.

3. Formklemmvorrichtung (10), die Folgendes aufweist:
eine stationäre Platte (12), die eine stationäre Form (11a) trägt;
eine bewegbare Platte (13, 13A), die bezüglich der stationären Platte (12) gegenüberliegend angeordnet ist und eine bewegbare Form (11b) trägt;
einen bewegbaren Kniehebelträger (15);
einen Kniehebelmechanismus (20), der zwischen der bewegbaren Platte (13, 13A) und dem Kniehebelträger (15) vorgesehen ist und geeignet ist, einen Formklemmvorgang auszuführen; und
einen Formklemmkraftsensor (18, 40, 41), der eine Formberührung detektiert und einen Detektionswert liefert, der zum Detektieren einer Formklemmkraft verwendet werden soll,
wobei die Formklemmvorrichtung (10) ausgebildet ist zum Ausführen der Formklemmeinstellung, indem der Kniehebelträger (15) in einer Formschließrichtung voranbewegt wird, zum Überwachen des Detektionswerts vom Formklemmsensor (18, 40, 41) und zum Stoppen des Kniehebelträgers (15), wenn der Detektionswert einen Schwellenwert erreicht, und
wobei der Formklemmkraftsensor (18, 40, 41) ein Zugstangendehnungssensor (18), der eine Dehnung einer Zugstange (16) detektiert, und/oder ein Drucksensor (40), der an einer bewegbaren Platte (13, 13A) installiert ist und eine Druckkraft detektiert, die auf die bewegbare Platte (13, 13A) aufgebracht wird, und/oder ein Dehnungssensor (41), der eine Dehnung eines Komponententeils des Kniehebelmechanismus (20) detektiert, ist.

4. Formklemmvorrichtung (10) nach Anspruch 3, wobei die Formklemmvorrichtung (10) ausgeführt ist, um den Kniehebelträger (15) in der Formschließrichtung voranzubewegen, nachdem eine bewegbare Platte (13, 13A) zu einer vollständig geschlossenen Position bewegt wurde und der Kniehebelmechanismus (20) betätigt wird, um einen Formöffnungsvorgang auszuführen.

## Revendications

1. Procédé de réglage de conditions de moulage, appliqué à un dispositif de serrage de moule (10) utilisant un mécanisme articulé à leviers coudés (20), comprenant :
déplacer (S3) un support à leviers coudés (15) en direction d'une fermeture de moule ;
surveiller (S4) une valeur détectée à partir d'un capteur de force de serrage de moule (18, 40, 41) pour détecter un touché de moule, le capteur de force de serrage de moule (18, 40, 41) étant un capteur quelconque parmi un capteur de contrainte de barre de liaison (18) détectant la contrainte d'une barre de liaison (16), un capteur de pression (40) installé sur une platine mobile (13, 13A) et détectant une force de pression appliquée à la platine mobile (13, 13A), et un capteur de contrainte (41) détectant la contrainte d'une pièce composant le mécanisme articulé à leviers coudés (20) ; et
arrêter (S5) le support à leviers coudés (15) lorsque la valeur de détection atteint une valeur de seuil.

2. Procédé de réglage de conditions de moulage selon la revendication 1, dans lequel
après que la platine mobile (13, 13A) a été déplacée vers une position de fermeture complète de moule (S1) et que le mécanisme articulé à leviers coudés (20) a été actionné pour réaliser une ouverture de moule (S2), le support à leviers coudés (15) est déplacé dans la direction de fermeture de moule (S3).

3. Dispositif de serrage de moule (10) comprenant :
une platine fixe (12) supportant un moule fixe (11a) ;
une platine mobile (13, 13A) prévue opposée à la platine fixe (12) et supportant un moule mobile (11b) ;
un support à leviers coudés mobile (15) ;
un mécanisme articulé à leviers coudés (20) prévu entre la platine mobile (13, 13A) et le support à leviers coudés (15) et adapté à réaliser un serrage de moule ; et
un capteur de force de serrage de moule (18, 40, 41) détectant un touché de moule et fournissant une valeur de détection à utiliser pour détecter une force de serrage de moule,
dans lequel le dispositif de serrage de moule (10) est adapté à réaliser un réglage de serrage de moule en déplaçant le support à leviers coudés (15) en direction de la fermeture de moule, en surveillant la valeur de détection provenant du capteur de serrage de moule (18, 40, 41), et en arrêtant le support à leviers coudés (15) lorsque la valeur de détection atteint une valeur de seuil, et
dans lequel le capteur de force de serrage de moule (18, 40, 41) est un capteur quelconque parmi un capteur de contrainte de barre de liaison (18) détectant la contrainte d'une barre de liaison (16), un capteur de pression (40) installé sur une platine mobile (13, 13A) et détectant une force de pression appliquée à la platine mobile (13, 13A), et un capteur de contrainte (41) détectant la contrainte d'une pièce composant le mécanisme articulé à leviers coudés (20).

4. Dispositif de serrage de moule (10) selon la revendication 3, dans lequel le dispositif de serrage de moule (10) est adapté à déplacer le support à leviers coudés (15) en direction de la fermeture de moule, après qu'une platine mobile (13, 13A) a été déplacée vers une position de fermeture complète de moule et que le mécanisme articulé à leviers coudés (20) a été actionné pour réaliser une ouverture de moule.
